# EUROPEAN PATENT SPECIFICATION

(11) **EP 1 068 969 B1**
(45) Date of publication and mention of the grant of the patent: **29.09.2004**
(21) Application number: 00202373.7
(22) Date of filing: 07.07.2000
(51) Int. Cl.: B60J 1/02, B62D 25/06, B60J 7/043

(54) **Glass roof with an impact resistant protection**
Glasdach mit Antistossschutz
Toit en vitre avec une protection antichoc

(30) Priority: 14.07.1999 EP 99202297
(43) Date of publication of application: 17.01.2001
(73) Proprietor: GLAVERBEL, B-1170 Bruxelles (BE)
(72) Inventor: Lucca, Nerio, 6040 Jumet (BE); Rea, Giovanni, 6040 Jumet (BE)
(74) Representative: Farmer, Guy

(56) References cited:
- DE-A- 3 908 433
- FR-A- 2 445 776
- PATENT ABSTRACTS OF JAPAN vol. 018, no. 544 (M-1688), 18 October 1994 (1994-10-18) & JP 06 191797 A (TOYOTA AUTOM LOOM WORKS LTD), 12 July 1994 (1994-07-12)
- PATENT ABSTRACTS OF JAPAN vol. 011, no. 140 (M-586), 8 May 1987 (1987-05-08) & JP 61 278472 A (NISSAN MOTOR CO LTD), 9 December 1986 (1986-12-09)

## Description

This invention relates to automotive glazings panels according to the preamble of claim 1, which form a part of the roof or the entire roof of a vehicle. A panel of this kind is disclosed in JP 06191797.

Glass panels used in car sunroofs are commonly single sheets of glass which, for security reasons, are tempered to increase their breaking resistance and to control the size of the fragments into which they break. Risk of breakage of a sunroof glazing by impact of small stones or gravel whist driving (for example whilst driving on a motorway) is extremely small as traditional sunroof panels are substantially horizontal, are set back from the leading edge of the roof of the vehicle and are fairly small in comparison with the overall area of the roof. Even for pivoting sunroof panels in which the rear edge can be raised the angle of inclination is generally sufficiently small that the risk of impact from gravel is fairly small.

An alternative construction is for glass panels for automotive roofs to be laminated, for example to comprise two sheets of glass laminated together by a layer of pvb, to provide desirable breakage characteristics.

According to first and second aspect, the present invention provides glazing panels as defined in claim 1 and claim 3.

For vehicle designs in which the front of a roof glazing panel is arranged at a significant angle to the horizontal the risk of impact from gravel may be significant. The inventors have realised that this may present a problem in that for certain shapes of roof panels, particularly roof panels that are significantly curved towards their front edge and/or for which the front portion of the surface of the glazing is arranged at a significant angle to the horizontal, at least a portion of the external surface of the glazing panel may be at risk from impact of flying stones and gravel. The inventors have additionally realised that the present invention may be used to overcome or at least significantly reduce the risk of glass breakage from impact at such areas so as to permit use of glass for such applications without limiting shapes that may otherwise be unfeasible or introducing complex manufacturing techniques or processes.

The invention may be particularly appropriate for use where the front portion of a vehicle roof glazing panel is exposed to the risk of impact from flying stones or gravel, for example where the desired shape of the glazing results in the front portion of the glazing panel forming an angle of greater than about 8°, 10°, 12°, 15°, 20°, 25°, 30° or more to the horizontal when the vehicle is standing on a substantially horizontal surface and/or where the glazing panel is substantially curved or non-planar.

The at least one portion of the glazing panel with which the impact protector is associated may be a band of the glazing panel; this band may extend substantially across the entire width of the glazing panel, it may be spaced from the front edge of the glazing panel; it may be adjacent or substantially adjacent to the front edge of the glazing panel; it may extent substantially parallel to the front edge of the glazing panel. The impact protector may be associated with more than one portion of the glazing panel.

The impact protector is preferably a gravel impact protector (the term gravel is intended to encompass any type of small stone or small stone like particle ). It may be adapted to reduce the likelihood of damage to or breaking of the glazing panel, especially at the impact protector, due to flying gravel. It may be adapted to reduce the extent of damage in such circumstances and/or to hold portions of the glazing panel together in the case of breakage or damage.

The front portion of the external surface of the glazing panel may be positioned at or substantially at the leading edge of the vehicle roof (i.e. not set back from or not significantly set back from the front edge of the roof). In such arrangements, the glazing panel may be particularly prone to impact from gravel. The front portion of the external surface of the glazing panel may form a continuation of the vehicle's windscreen.

The glazing panel may be a security glazing. Preferably, the glazing panel conforms to European Standard CE R43 and/or any modifications or replacements of this European Standard or equivalents in other territories. European standard EC R43 defines, inter alia, the breaking characteristics of tempered automotive glazings. For example, it is desirable for a tempered glazing to be tempered to such an extent that a 5cm x 5cm panel breaks into between 40 and 400 pieces when broken.

The impact protector may be integral with the glazing panel; this may facilitate assembly of the glazing panel into the vehicle and/or provide a desirable aesthetic appearance.

The glazing panel may constitute the entire vehicle roof or a substantial portion of the vehicle roof. In this case, the desirability of ensuring sufficient impact resistance is particularly relevant.

The glazing may comprise a single sheet of tempered glass. In this case the invention may be particularly applicable as the front portion of the glazing panel may correspond to a portion that for a tempered glazing is particularly fragile with respect to impact breakage. This may allow use of a single tempered glazing panel (rather than for example a laminated glass panel) in situations and/or shapes where the risk of breakage from impact would otherwise preclude such usage or be undesirable.

The glazing may be a fixed glazing. It may be non-openable and/or non-pivotable.

Providing the impact protector in the form of an impact resistant film of a plastics material secured to the external surface of the glazing panel may provide a particularly effective way of realising the invention whilst in addition being fairly simple to put into practice and/or aesthetically pleasing and/or suitable to providing desirable aerodynamic performance and/or wind noise characteristics for the vehicle.

The impact resistant film may be substantially non-supporting, that is, it may be a flexible film that has insufficient rigidity to maintain its shape unless supported over the majority of its surface area, for example, by the glazing panel.

A polyurethane film may be particularly suitable. This may be applied to the glazing panel by spraying water onto the glazing panel, applying the tape and subsequently removing the water, for example by using a spatula. This method may help to eliminate the risk of forming bubbles or blisters during application of the film and allow for repositioning of the film during its application. The impact resistant film may be secured to the glazing panel by means of an adhesive, for example a resin rubber adhesive.

It is believed desirable for the impact resistant film to have a thickness of at least about 200 microns in order to provide desirable levels of impact resistance. The impact resistant film may be thicker than this and may have a thickness of at least about 250 microns, 300 microns, 350 microns, 400 microns or more. The impact resistant film need not be of constant thickness across its width. In this case, its thickest portion may have the aforementioned thickness . The impact resistant film may have a thickness of less than about 1mm, 0.8mm or 0.6mm.

A PVC or other plastics material may be used for the impact protector, particularly when this is in the form of an impact resistant film..

The impact resistant film may be crinkled to enhance its impact resistance and/or affect its visual appearance. It may be a composite material, for example having more than one layer. It may be substantially transparent, substantially translucent or substantially opaque. In the later case it may be black in colour.

A pattern, logo or design may appear on the impact resistant film, particularly on its external surface, for example in the form of printing or embossing. This may enhance its aesthetic appearance.

The impact resistant film preferably has sufficient ultra violet light resistance for exposed use on automotive vehicles

It is believed that the most fragile portion of a tempered glazing panel for an automotive roof may be a band around the periphery of the glazing which is spaced about 3 to 5 mm from the actual edge of the glazing and has a width of about 25 to 30mm. At least in the case of a tempered glazing, the impact protector is preferably arranged so that it protects at least this fragile zone at the front edge of the glazing panel. The impact protector preferably protects a greater area than this, preferably a zone which is at most risk from impact from flying stones or gravel due to the shape and arrangement of the glazing. It may be convenient, for example to use an impact protector in the form of a film which is about 200 mm wide arranged towards the front edge of the glazing panel. This may help to ensure that the most desirable area of the glazing panel is protected and/or facilitate securing of the film at or to the glazing panel and/or provide an arrangement which is visually pleasing.

The invention may facilitate a technical solution to reduce the risk of impact breakage which, in addition, may be suitably and/or easily masked from the interior of the vehicle. This may be aesthetically desirable and may also provide for the use of materials which, if unmasked, would be unacceptable.

The impact protector of the glazing panel may be substantially masked from view from the interior of the vehicle by means of a substantially opaque paint, film or enamel applied to the interior surface of the glazing panel. According to a further aspect, the present invention provides for use of an integral impact resistant protector as defined in Claim 14.

An embodiment of the present invention will now be described, by way of example only, with reference to the accompanying drawings of which:
Fig 1 is a schematic side view of a glazing panel according to the present invention arranged with a vehicle windscreen, and
Fig 2 is a schematic perspective view of this arrangement.

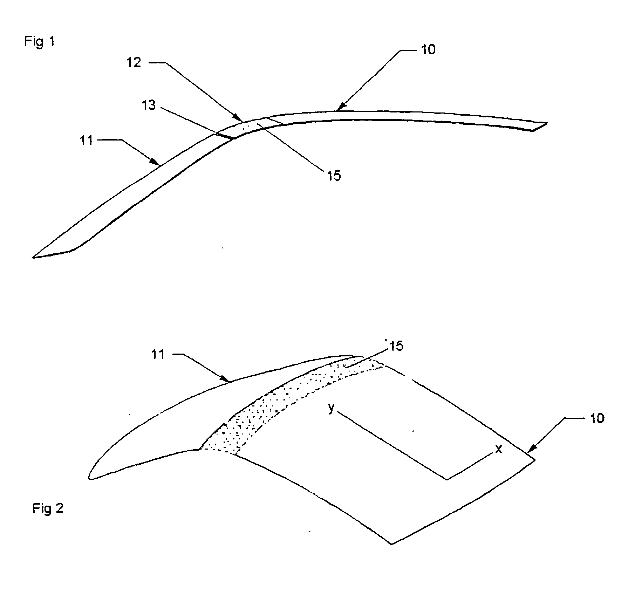

Fig 1 and Fig 2 show a glazing panel 10 for an automotive roof in the position in which it is intended to be arranged on a vehicle with respect to the vehicle's windscreen 11. The windscreen comprises a laminated glazing panel whilst, in this embodiment, the roof 10 consists of a single sheet of thermally tempered glass about 3.6 mm thick. The front portion of the glazing panel 10 forms a continuation of the windscreen and is positioned at the leading edge of the roof. This front portion is curved in direction y and the front edge 13 is arranged at an angle of about 34° to the horizontal (the same angle as the top edge of the windscreen). The glazing panel curves rearwardly along axis y such that this angle reduces moving rearwardly along the glazing panel.

A gravel impact protector 15 is provided at the front portion of the glazing panel 10 in the form of an impact resistant film of black polyurethane having a thickness of about 200 microns. The film forms an integral part of the glazing panel in that it is not spaced from the surface of the glazing panel but is supported directly on the surface of the glazing panel. The impact resistant film 15 extents across the entire width of the glazing panel 10 and extends rearwardly for about 200 mm from the front edge 13.

The impact resistant film is associated with a front portion of the glazing panel, in this case the front portion of the glazing panel which is positioned in front of the leading edge of the roof (i.e. the portion of the glazing panel positioned in front of the position at the front of the vehicle roof at which a tangent to the curvature of the roof in direction y is substantially horizontal).

The impact resistant film protects the front portion of the glazing which is most susceptible to impact from flying gravel and small stone.

## Claims

1. A glazing panel (10) for an automotive roof adapted to be arranged such that a front portion of the external surface of the glazing panel forms an angle of greater than about 8 degrees with the horizontal, **characterised in that** the glazing panel is provided with a impact protector (15) associated with at least one portion of the glazing panel.

2. A glazing panel (10) in accordance with claim 1 , in which the impact protector (15) comprises an impact resistant film comprising a plastics material secured to at least part of the external surface of the glazing panel.

3. An automotive roof glazing panel (10) having an impact protector (15) in the form of an impact resistant film comprising a plastics material secured to at least part of the external surface of the glazing panel.

4. A glazing panel (10) in accordance with claim 2 or claim 3, in which the impact resistant film is a polyurethane film having a thickness of at least about 200 microns.

5. A glazing panel (10) in accordance with any one of claim 2 to 3, in which the impact resistant film is a PVC film.

6. A glazing panel (10) in accordance with any one of claims 2 to 5 in which the impact resistant film covers at least a portion of the glazing which comprises a band which extends substantially across the entire width of the glazing from a position spaced about 5mm from the front edge (13) of the glazing to a position spaced about 35mm from the front edge of the glazing.

7. A glazing panel (10) in accordance with one of claims 2 to 6 in which the impact resistant film is about 200mm wide and extent substantially across the entire width of the glazing substantially from the front edge (13) of the glazing.

8. A glazing panel (10) in accordance with any preceding claim, in which the glazing panel comprises a single sheet of tempered glass.

9. A glazing panel (10) in accordance any preceding claim, in which the glazing panel extends to or extends substantially to the leading edge of the automotive roof.

10. A glazing panel (10) in accordance with any preceding claim, in which the glazing panel is non-moveable.

11. A glazing panel (10) in accordance with any preceding claim in which the impact protector (15) is substantially masked from view from the interior of the vehicle.

12. A glazing panel (10) in accordance with Claim 11 in which the impact protector (15) is substantially masked from view from the interior of the vehicle by means of a substantially opaque paint, film or enamel applied to the interior surface of the glazing panel.

13. A glazing panel (10) in accordance with any preceding claim in which the glazing panel comprises substantially the entire roof area of the vehicle.

14. Process for protecting at least a front portion of a glass automotive roof which comforms to European Standard CE R43 from breakage by impact of small stones or grit **characterised in that** an impact resistant protector film is positioned at the external surface of the glass automotive roof.

15. A process in accordance with Claim 14 in which the glass automotive roof comprises a single sheet of tempered glass which comprises substantially the entire roof area of the vehicle.

## Patentansprüche

1. Verglasungsscheibe (10) für ein Automobildach, die derart angepaßt ist, daß ein vorderer Bereich der äußeren Oberfläche der Verglasungsscheibe einen Winkel von größer als etwa 8 Grad mit der Horizontalen bildet, **dadurch gekennzeichnet, daß** die Verglasungsscheibe mit einem Einschlagschutz (15) versehen ist, der mit mindestens einem Bereich der Verglasungsscheibe verbunden ist.

2. Verglasungsscheibe (10) nach Anspruch 1, wobei der Einschlagschutz (15) einen Einschlag-beständigen Film umfaßt, der ein Kunststoffmaterial umfaßt, welcher an mindestens einen Teil der äußeren Oberfläche der Verglasungsscheibe befestigt ist.

3. Automobildach-Verglasungsscheibe (10) mit einem Einschlagschutz (15) in Form eines Einschlag-beständigen Films, der ein Kunststoffmaterial umfaßt, welcher an mindestens einen Teil der äußeren Oberfläche der Verglasungsscheibe befestigt ist.

4. Verglasungsscheibe (10) nach Anspruch 2 oder Anspruch 3, wobei der Einschlag-beständige Film ein Polyurethanfilm mit einer Dicke von mindestens etwa 200 µm ist.

5. Verglasungsscheibe (10) nach einem der Ansprüche 2 bis 3, wobei der Einschlag-beständige Film ein PVC-Film ist.

6. Verglasungsscheibe (10) nach einem der Ansprüche 2 bis 5, wobei der Einschlag-beständige Film mindestens einen Bereich der Verglasung abdeckt, der ein Band umfaßt, welches sich im wesentlichen über die gesamte Breite der Verglasung von einer Position, die einen Abstand von etwa 5 mm von der vorderen Kante (13) der Verglasung aufweist, zu einer Position, die einen Abstand von etwa 35 mm von der vorderen Kante der Verglasung aufweist, erstreckt.

7. Verglasungsscheibe (10) nach einem der Ansprüche 2 bis 6, wobei der Einschlag-beständige Film etwa 200 mm breit ist und sich im wesentlichen über die gesamte Breite der Verglasung, im wesentlichen von der vorderen Kante (13) der Verglasung, erstreckt.

8. Verglasungsscheibe (10) nach einem vorhergehenden Anspruch, wobei die Verglasungsscheibe eine einzelne Schicht aus einem vorgespannten Glas umfaßt.

9. Verglasungsscheibe (10) nach einem vorhergehenden Anspruch, wobei sich die Verglasungsscheibe zu der Anstiegsflanke des Automobildachs erstreckt oder im wesentlichen erstreckt.

10. Verglasungsscheibe (10) nach einem vorhergehenden Anspruch, wobei die Verglasungsscheibe nicht bewegbar ist.

11. Verglasungsscheibe (10) nach einem vorhergehenden Anspruch, wobei der Einschlagschutz (15) im wesentlichen vor Sicht aus dem Inneren des Fahrzeugs verdeckt ist.

12. Verglasungsscheibe (10) nach Anspruch 11, wobei der Einschlagschutz (15) im wesentlichen vor Sicht aus dem Inneren des Fahrzeugs mittels eines im wesentlichen opaken, auf die innere Oberfläche der Verglasungsscheibe aufgetragenen Anstrichs, Films oder Emailles verdeckt ist.

13. Verglasungsscheibe (10) nach einem vorhergehenden Anspruch, wobei die Verglasungsscheibe im wesentlichen die gesamte Dachfläche des Fahrzeugs umfaßt.

14. Verfahren zum Schützen mindestens eines vorderen Bereichs eines Glasautomobildachs, welches dem europäischen Standard CE R43 vor Bruch durch Einschlag von kleinen Steinen oder Splitt entspricht, **dadurch gekennzeichnet, daß** ein Einschlag-beständiger Schutzfilm an der äußeren Oberfläche des Glasautomobildachs angeordnet ist.

15. Verfahren nach Anspruch 14, wobei das Glasautomobildach eine einzelne Schicht aus einem vorgespannten Glas umfaßt, das im wesentlichen die gesamte Dachfläche des Fahrzeugs umfaßt.

## Revendications

1. Un vitrage (10) pour un toit automobile adapté pour être disposé de telle sorte qu'une portion frontale de la surface externe du vitrage forme un angle de plus d'environ 8 degrés avec l'horizontale, **caractérisé en ce que** le vitrage est pourvu d'une protection contre les impacts (15) associée avec au moins une portion du vitrage.

2. Un vitrage (10) conformément à la revendication 1, dans lequel la protection contre les impacts (15) comprend un film résistant aux impacts comprenant une matière plastique fixée à au moins une partie de la surface externe du vitrage.

3. Un vitrage de toit automobile (10) ayant une protection contre les impacts (15) sous la forme d'un film résistant aux impacts comprenant une matière plastique fixée à au moins une partie de la surface externe du vitrage.

4. Un vitrage (10) conformément à la revendication 2 ou à la revendication 3, dans lequel le film résistant aux impacts est un film en polyuréthane ayant une épaisseur d'au moins environ 200 microns.

5. Un vitrage (10) conformément à l'une quelconque des revendications 2 ou 3, dans lequel le film résistant aux impacts est un film en PVC.

6. Un vitrage (10) conformément à l'une quelconque des revendications 2 à 5, dans lequel le film résistant aux impacts couvre au moins une partie du vitrage qui comprend une bande qui s'étend substantiellement sur la largeur totale du vitrage à partir d'une position distante d'environ 5 mm du bord avant (13) du vitrage jusqu'à une position distante d'environ 35 mm du bord avant du vitrage.

7. Un vitrage (10) conformément à l'une quelconque des revendications 2 à 6, dans lequel le film résistant aux impacts est large d'environ 200 mm et s'étend substantiellement sur la largeur totale du vitrage, substantiellement à partir du bord avant (13) du vitrage.

8. Un vitrage (10) conformément à l'une quelconque des revendications précédentes, dans lequel le vitrage comprend une feuille unique de verre trempé.

9. Un vitrage (10) conformément à l'une quelconque des revendications précédentes, dans lequel le vitrage s'étend ou s'étend substantiellement jusqu'au bord d'attaque du toit automobile.

10. Un vitrage (10) conformément à l'une quelconque des revendications précédentes, dans lequel le vitrage est inamovible.

11. Un vitrage (10) conformément à l'une quelconque des revendications précédentes, dans lequel la protection contre les impacts (15) est substantiellement masquée à la vue de l'intérieur du véhicule.

12. Un vitrage (10) conformément à la revendication 11, dans lequel la protection contre les impacts (15) est substantiellement masquée à la vue de l'intérieur du véhicule au moyen d'une peinture, d'un film ou d'un émail substantiellement opaque appliqué sur la face intérieure du vitrage.

13. Un vitrage (10) conformément à l'une quelconque des revendications précédentes, dans lequel le vitrage comprend substantiellement la totalité de la surface du toit du véhicule.

14. Un processus pour protéger au moins une portion avant d'un toit automobile en verre qui est conforme à la Norme européenne CE R43 de la rupture par l'impact de petites pierres ou de grenailles **caractérisé en ce qu'**un film protecteur résistant aux impacts est positionné sur la surface externe du toit automobile en verre.

15. Un processus conformément à la Revendication 14, dans lequel le toit automobile en verre comprend une feuille unique de verre trempé qui comprend substantiellement la totalité du toit du véhicule.
